(19) Europäisches Patentamt
European Patent Office
Office européen des brevets

(11) **EP 2 880 485 B1**

(12) **EUROPÄISCHE PATENTSCHRIFT**

(45) Veröffentlichungstag und Bekanntmachung des Hinweises auf die Patenterteilung:
**25.12.2019  Patentblatt 2019/52**

(21) Anmeldenummer: **13747338.5**

(22) Anmeldetag: **24.07.2013**

(51) Int Cl.:
**G02B 27/00** *(2006.01)*    **G02B 26/12** *(2006.01)*

(86) Internationale Anmeldenummer:
**PCT/DE2013/100275**

(87) Internationale Veröffentlichungsnummer:
**WO 2014/019572 (06.02.2014 Gazette 2014/06)**

(54) **ACHROMATISCHE SCANEINRICHTUNG MIT MONOCHROMATISCHEM F-THETA OBJEKTIV**

ACHROMATIC SCANNING DEVICE HAVING A MONOCHROMATIC F-THETA OBJECTIVE

DISPOSITIF DE BALAYAGE ACHROMATIQUE AVEC OBJECTIF F-THÊTA MONOCHROMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2012  DE 102012107040**

(43) Veröffentlichungstag der Anmeldung:
**10.06.2015  Patentblatt 2015/24**

(73) Patentinhaber: **JENOPTIK Optical Systems GmbH**
**07745 Jena (DE)**

(72) Erfinder:
• **KRÜGER, Ullrich**
**07551 Milda (DE)**
• **DRESSLER, Thomas**
**07749 Jena (DE)**
• **HEINEMANN, Stefan**
**07745 Jena (DE)**

(74) Vertreter: **Schaller, Renate et al**
**Patentanwälte Oehmke & Kollegen**
**Neugasse 13**
**07743 Jena (DE)**

(56) Entgegenhaltungen:
EP-A1- 0 211 803    EP-A1- 0 589 700
US-A- 5 262 887    US-A1- 2005 185 238
US-B1- 6 278 109

**Beschreibung**

Die Erfindung betrifft eine achromatische Scaneinrichtung, wie sie gattungsgemäß aus der Patentschrift DE 603 02 183 T2 bekannt ist.

Mit der vorgenannten Patentschrift DE 603 02 183 T2 ist eine achromatische Scaneinrichtung (hier optisches Abtastgerät) mit einem chromatisch korrigierten F-Theta Objektiv (auch F-θ Objektiv) veröffentlicht.

Eine Scaneinrichtung, wie sie gemäß der vorbenannten DE 603 02 183 T2 z. B. in einem Laserdrucker oder gemäß der vorliegenden Erfindung z. B. zur Leiterplattendirektbelichtung verwendet werden kann, scannt eine ebene Zieloberfläche mit einem Lichtbündel entlang einer Scanlinie in einer Scanrichtung ab, während die Zieloberfläche zur Scaneinrichtung bzw. diese zur Zieloberfläche in einer zur Scanrichtung senkrecht verlaufenden Vorschubrichtung bewegt wird.

Das Scannen des Lichtbündels in Scanrichtung erfolgt über eine Scaneinheit z. B. mit einem Galvanometerspiegel oder einem Polygonspiegel, der sich mit einer gleichmäßigen Winkelgeschwindigkeit dreht. Damit das Lichtbündel die Zieloberfläche mit einer gleichförmigen Geschwindigkeit abscannt, wird gemäß der vorbenannten DE 603 02 183 T2 als eine der Scaneinheit nachgeordnete Optik (Postscanoptik) ein sogenanntes F-Theta Objektiv verwendet. Ein solches F-Theta Objektiv hat eine Verzeichnungscharakteristik, welche im Idealfall $y = f*θ$ (f = Brennweite; θ = Einkoppelwinkel = Winkel, den der Achsstrahl eines in das F-Theta Objektiv eintretenden Lichtbündels mit der optischen Achse des F-Theta Objektivs einschließt; y = Bildhöhe) erfüllt.

Eine gattungsgemäße Scaneinrichtung umfasst eine Lichtquelle, eine der bereits erwähnten Scaneinheit vorgeordnete Optik (Prescanoptik) zur Formung und Führung eines von der Lichtquelle kommenden Lichtbündels auf die Scaneinheit und eine der Scaneinheit nachgeordnete Optik (Postscanoptik) zur Formung und Führung des durch die Scaneinheit abgelenkten Lichtbündels auf eine Zieloberfläche.

Eine ideale Abbildung des Lichtbündels in der Bildhöhe y in der Ebene der Zieloberfläche, das heißt in Scanrichtung mit einem Abstand y zur optischen Achse des F-Theta Objektivs (nachfolgend ideale Bildposition), erfolgt nur für ein Lichtbündel mit einer Wellenlänge, sofern das durch die Scaneinrichtung gebildete optische System monochromatisch, das heißt chromatisch nicht korrigiert ist. Das heißt, dass für Lichtbündel mit einem Wellenlängenspektrum, das nicht nur eine einzelne Wellenlänge innerhalb einer zu vernachlässigbaren Bandbreite aufweist, wellenlängenabhängige Abbildungen in mehreren Bildpositionen oder, bei einer großen Bandbreite, eine in der Tiefe und im Querschnitt ausgedehnte Abbildung um die ideale Bildposition entstehen. Bei einem typischen Beispiel für ein monochromatisches System können alle brechenden Elemente aus dem gleichen Material bestehen.

Das kann z. B. zutreffen, wenn sich die Wellenlänge eines Lichtbündels mit der Betriebstemperatur ändert, das heißt, dass dessen Arbeitswellenlänge in einem Wellenlängenbereich zwischen zwei Wellenlängen, z. B., wie in der vorgenannten DE 603 02 183 T2 angegeben, zwischen 400 nm und 410 nm liegt.

Das kann z. B. auch zutreffen, wenn das Lichtbündel Bündelanteile zweier verschiedener Wellenlängen, wie z. B. 375 nm und 405 nm, aufweist oder die Lichtquelle ein zwischen zwei Wellenlängen breitbandiges Lichtbündel emittiert.

Damit von derartigen Lichtbündeln die Bündelanteile zweier Wellenlängen in eine ideale Bildposition scharf abgebildet werden und damit insgesamt die Abbildungsqualität verbessert wird, muss das optische System achromatisch sein, das heißt, es ist so gerechnet, dass es für diese beiden Wellenlängen korrigiert ist.

Im Sinne der Erfindung sollen alle Lichtbündel, für die eine Verbesserung der Abbildungsqualität durch eine Korrektur des optischen Systems für zwei Wellenlängen erreichbar ist, als Lichtbündel mit zwei Bündelanteilen unterschiedlicher Wellenlänge verstanden werden, für welche die Scaneinrichtung farbfehlerkorrigiert ist.

Alle optischen Materialien weisen eine materialspezifische, wellenlängenabhängige Brechzahl (Dispersion) auf, weshalb Bündelanteile unterschiedlicher Wellenlängen unterschiedlich stark gebrochen werden und mit Längsabweichungen (Farblängsfehler = longitudinale chromatische Abberation) in Richtung der optischen Achse und Querabweichungen (Farbquerfehler = chromatische Abberation der Vergrößerung) in Scanrichtung, senkrecht zur optischen Achse, abgebildet werden. Bei einer Scaneinrichtung gemäß der vorbenannten DE 603 02 183 T2 wird die Prescanoptik, von einem lediglich der Strahlumlenkung dienenden Planspiegel abgesehen, durch einen Kollimator und eine Zylinderlinse gebildet. Aufgrund der achromatischen Ausführung des F-Theta Objektivs liegt es auf der Hand, dass auch die Prescanoptik achromatisch ist und somit ein achromatisches kollimiertes Lichtbündel, von dem Polygonspiegel abgelenkt, auf das F-Theta Objektiv auftrifft.

Das F-Theta Objektiv gehört zur Postscanoptik (hier optisches Abbildungssystem) und ist speziell ausgeführt. Es besteht aus Linsen bzw. Linsengruppen mit einer bestimmten Brechkraftfolge und erfüllt bestimmte geometrische Bedingungen, um eine gute Achromasie zu erreichen.

Als Materialien werden hier z. B. Hyaline oder optische Kunststoffe verwendet.

Die beschriebene Scaneinrichtung ist für nur geringe Leistungen, kleiner 1 W, geeignet. Für Leistungen größer 5 W im UV-Bereich, mit der Forderung nach einer langen Lebensdauer, ist die Auswahlmöglichkeit von Materialen, die zum Aufbau eines achromatischen F-Theta Objektivs in Frage kommen, sehr eingeschränkt. Hierfür kommen nur synthetisches Quarzglas oder Kalziumfluorid in Frage. Letzteres ist sehr teuer in der Herstellung und in der Bearbeitung.

Aus der US 2005/185238 A1 ist eine Scaneinrichtung offenbart, die im Sinne der Erfindung eine Prescanoptik, einen Polygonspiegel und eine Postscanoptik aufweist. Die Prescanoptik besteht aus einem ersten optischen System und einem zweiten optischen System, wobei das zweite optische System eine asphärische optische Fläche aufweist, welche die sphärische Aberration, verursacht durch das erste optische System, kompensiert. Vorteilhaft kann diese asphärische Fläche eine diffraktive Fläche enthalten, welche auch den chromatischen Fehler des gesamten optischen Systems korrigiert. Ob und gegebenenfalls wie damit neben einem Farblängsfehler ein Farbquerfehler kompensiert wird, zumal die Prescanoptik den Lichtstrahl in einen wenigstens nahezu kollimierten Lichtstrahl formt, ist völlig unklar.

Die EP 0 211 803 A1 offenbart eine Scaneinrichtung mit einem F-Theta Objektiv, die für eine monochromatische Nutzung, das heißt eine Nutzung mit Laserstrahlung nur einer Wellenlänge vorgesehen ist. Dem folgend ist das optische System dieser Scaneinrichtung chromatisch nicht korrigiert und es sind keine Maßnahmen für eine chromatische Korrektur getroffen.

Es ist die Aufgabe der Erfindung, eine kostengünstige achromatische Scaneinrichtung zu finden, die für einen hohen Energieeintrag, größer 5 W, durch Lichtbündel mit Bündelanteilen zweier Wellenlängen im UV-Bereich geeignet ist.

Diese Aufgabe wird für eine achromatische Scaneinrichtung mit einer Lichtquelle, einer mit einem rotierbaren Polygonspiegel, einen Polygonwinkel aufweisend, gebildeten Scaneinheit, einer dem Polygonspiegel vorgeordneten Prescanoptik und einer dem Polygonspiegel nachgeordneten Postscanoptik, die durch ein F-Theta Objektiv gebildet ist, erfüllt. Die Lichtquelle ist dazu ausgelegt, ein Lichtbündel mit einem ersten Bündelanteil mit einer ersten Wellenlänge und einem zweiten Bündelanteil mit einer zweiten Wellenlänge auszusenden. Das F-Theta Objektiv formt und führt das durch den Polygonspiegel in eine Scanrichtung abgelenkte Lichtbündel auf eine Zieloberfläche, die für die beiden Bündelanteile in einer Bildebene der Postscanoptik angeordnet ist.

Es ist erfindungswesentlich, dass die Postscanoptik monochromatisch ist. So können alle deren brechende Elemente aus einem gleichen Material gefertigt sein, wodurch wellenlängenabhängige Farbfehler verursacht werden. Die Postscanoptik kann daher vergleichsweise billiger als eine achromatische Postscanoptik hergestellt werden. Die Prescanoptik und die Postscanoptik sind so ausgelegt und zueinander angeordnet, dass für ein auf die Zieloberfläche abgebildetes Lichtbündel eine erste Bildebene der Prescanoptik in einer ersten bildseitigen Schnittweite mit einer ersten Objektebene der Postscanoptik für den ersten Bündelanteil und eine zweite Bildebene der Prescanoptik in einer zweiten bildseitigen Schnittweite mit einer zweiten Objektebene der Postscanoptik für den zweiten Bündelanteil zusammenfallen. Dabei ist der ersten Objektebene der Postscanoptik und der zweiten Objektebene der Postscanoptik die Bildebene der Postscanoptik zugeordnet, womit für die beiden Bündelanteile der Farblängsfehler korrigiert ist.

Die Postscanoptik weist für den ersten Bündelanteil eine erste bildseitige Brennweite und für den zweiten Bündelanteil eine zweite bildseitige Brennweite auf, die folgende Gleichung erfüllen:

$$2f`_{post\lambda 1} W_p + f`_{post\lambda 1} W_{s1} (W_p; s`_{pre\lambda 1}) = 2f`_{post\lambda 2} W_p + f`_{post\lambda 2} W_{s2} (W_p; s`_{pre\lambda 2}),$$

wobei $W_{s1}$ eine Winkelkomponente des ersten Bündelanteils und $W_{s2}$ eine Winkelkomponente des zweiten Bündelanteils ist, womit für die beiden Bündelanteile auch der Farbquerfehler korrigiert ist.

Weitere vorteilhafte Ausführungen sind in den Unteransprüchen angegeben.

Die Erfindung wird nachfolgend an Ausführungsbeispielen anhand von Zeichnungen näher beschrieben.

Hierzu zeigen:

Fig. 1    ein Optikschema einer Scaneinrichtung zur Einkopplung eines Lichtbündels in Scanrichtung mit zwei Positionen des Polygonspiegels, für einen Bündelanteil,

Fig. 2    ein Optikschema einer Scaneinrichtung zur Einkopplung eines Lichtbündels in Crossscanrichtung mit einer Position des Polygonspiegels, für zwei Bündelanteile,

Fig. 3    eine Skizze zur Darstellung von Kenngrößen der Scaneinrichtung,

Fig. 4a    ein Ausführungsbeispiel einer Scaneinrichtung mit einem optischen Modulator zum Schwenken des Lichtbündels,

Fig. 4b    ein Ausführungsbeispiel einer Scaneinrichtung mit einer voll ausgeleuchteten Prescanoptik und

Fig. 5    eine Skizze zur Darstellung der Winkelkomponenten für die zwei Bündelanteile.

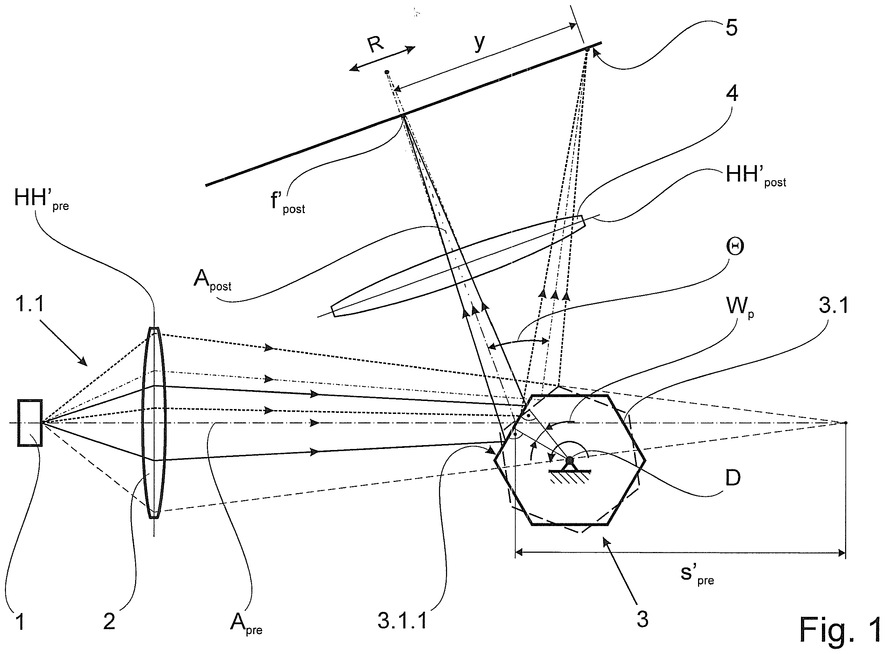

Eine erfindungsgemäße achromatische Scaneinrichtung umfasst gemäß allen Ausführungsbeispielen, wie in Fig. 1 gezeigt, eine Lichtquelle 1 sowie in deren Abstrahlrichtung nachgeordnet eine Prescanoptik 2, eine Scaneinheit 3 mit einem rotierbaren Polygonspiegel 3.1 und eine Postscanoptik 4, gebildet durch ein F-Theta Objektiv.

Bei einer Einkopplung eines von der Lichtquelle 1 ausgesandten Lichtbündels 1.1 in Scanrichtung R, wie in Fig. 1 gezeigt, sind die optischen Achsen der Prescanoptik $A_{pre}$ und der Postscanoptik $A_{post}$ in einer Ebene (Zeichenebene) mit der Scanrichtung R angeordnet. Die Drehachse D des Polygonspiegels 3.1 steht senkrecht auf dieser Ebene.

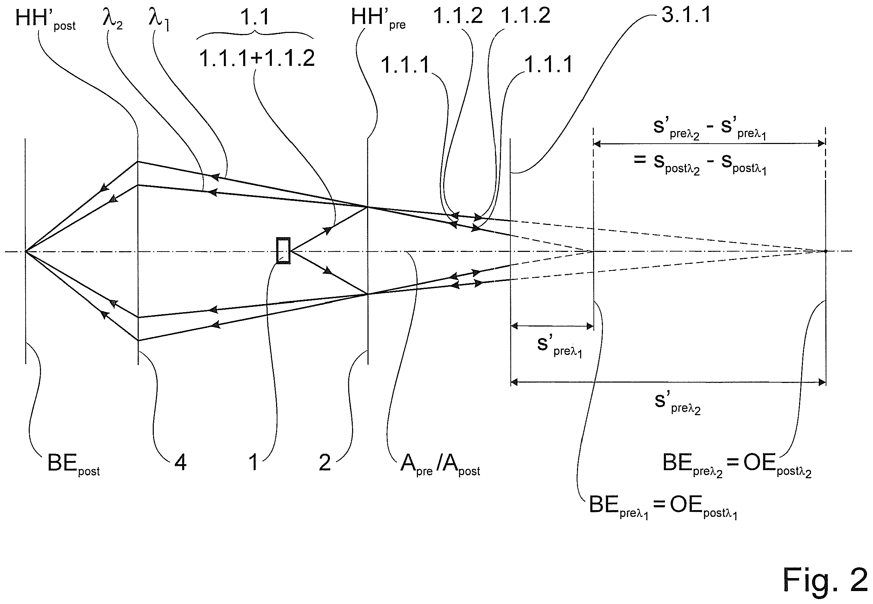

Bei einer Einkopplung des Lichtbündels 1.1 in Crossscanrichtung, wie in Fig. 2 gezeigt, liegen die optischen Achsen der Prescanoptik $A_{pre}$ und der Postscanoptik $A_{post}$ übereinander, gemeinsam mit der Drehachse D des Polygonspiegels 3.1 in einer Ebene, senkrecht zur Zeichenebene.

Diese beiden Varianten der Einkopplung des Lichtbündels 1.1 sind aus dem Stand der Technik bekannt. Die Position eines reflektierenden Polygonspiegels 3.1. wird als Nullstellung bezeichnet, wenn das von der Lichtquelle 1 aus einem Achspunkt der Prescanoptik 2 kommende Lichtbündel 1.1 in einem Achspunkt der Postscanoptik 4 abgebildet wird. Die Auslenkung des reflektierenden Polygonspiegels 3.1. um diese Nullstellung, das heißt die Polygonwinkelstellung, wird mit dem Polygonwinkel $W_p$ angegeben, welcher den Winkel zwischen der Flächennormalen in der Nullstellung und der Flächennormalen der gegenüber der Nullstellung ausgelenkten, reflektierenden Polygonspiegelfläche 3.1.1 bezeichnet.

Gegenüber dem Stand der Technik wird die Achromasie der Scaneinrichtung nicht dadurch erreicht, dass die Prescanoptik 2 und die Postscanoptik 4 achromatisch ausgeführt sind.

Als Lichtquelle 1 kommt jede Lichtquelle infrage, die, wie einleitend erläutert, ein Lichtbündel 1.1 mit einem ersten Bündelanteil 1.1.1 einer ersten Wellenlänge $\lambda_1$ und einem zweiten Bündelanteil 1.1.2 einer zweiten Wellenlänge $\lambda_2$ emittiert, für welche das optische System der Scaneinrichtung achromatisiert ist. Insbesondere, wenn die Lichtquelle 1 UV-Licht mit einer hohen Leistung größer 5 W aussendet, ist die Scaneinrichtung vorteilhaft, da hierfür im Vergleich zu ansonsten achromatisch herzustellenden Optiken der Einspareffekt durch nur monochromatisch ausgeführte Optiken besonders hoch ist.

Im Unterschied zum Stand der Technik, in dem ein von einer Lichtquelle ausgesendetes Lichtbündel 1.1 über eine achromatische Prescanoptik 2 kollimiert wird und als paralleles Lichtbündel 1.1 auf die Scaneinheit 3 gerichtet wird, wird das Lichtbündel 1.1 mit einer speziell an die Eigenschaften der monochromatischen Postscanoptik 4 angepassten Prescanoptik 2 in ein leicht divergentes bzw. konvergentes Lichtbündel 1.1 geformt und zwar so, dass die Schnittweitendifferenz der Prescanoptik 2 für die entstehenden Bildebenen der beiden Bündelanteile 1.1.1, 1.1.2 genauso groß ist, mit umgekehrten Vorzeichen, wie die Schnittweitendifferenz der Postscanoptik 4 bei einer Abbildung des Lichtbündels 1.1, aus einer Objektebene kommend, über die Postscanoptik 4 wäre.

Wie in Fig. 2 dargestellt, wird der erste Bündelanteil 1.1.1 mit der ersten Wellenlänge $\lambda_1$ in eine erste Bildebene $BE_{pre\lambda1}$ mit einer ersten bildseitigen Schnittweite $s'_{pre\lambda1}$ und der zweite Bündelanteil 1.1.2 mit der zweiten Wellenlänge $\lambda_2$ in eine zweite Bildebene $BE_{pre\lambda2}$ mit einer zweiten bildseitigen Schnittweite $s'_{pre\lambda2}$ virtuell abgebildet. Als bildseitige Schnittweiten der Prescanoptik 2 werden hier jeweils die Abstände zwischen den Bildebenen $BE_{pre\lambda1}$, $BE_{pre\lambda2}$ und der in Nullstellung stehenden reflektierenden Polygonspiegelfläche 3.1.1. verstanden.

Die Prescanoptik 2 ist so gerechnet, dass die Differenz zwischen den beiden bildseitigen Schnittweiten $s'_{pre\lambda2}$ - $s'_{pre\lambda1}$ (Schnittweitendifferenz) im Betrag und mit entgegengesetztem Vorzeichen der Differenz der objektseitigen Schnittweiten $s_{post\lambda2}$ - $s_{post\lambda1}$ für eine Abbildung des Lichtbündels 1.1 über die Postscanoptik 4 in deren Bildebene $BE_{post}$ entspricht, sodass die erste Bildebene der Prescanoptik $BE_{pre\lambda1}$ mit einer ersten Objektebene der Postscanoptik $OE_{post\lambda1}$, für die erste Wellenlänge $\lambda_1$ und die zweite Bildebene der Prescanoptik $BE_{pre\lambda2}$ mit einer zweiten Objektebene der Postscanoptik $OE_{post\lambda2}$ für die zweite Wellenlänge $\lambda_2$ zusammenfällt. Dabei ist der ersten und zweiten Objektebene der Postscanoptik $OE_{post\lambda1}$, $OE_{post\lambda2}$ eine gemeinsame Bildebene $BE_{post}$ zugeordnet, womit das Lichtbündel 1.1 mit den zwei Bündelanteilen 1.1.1, 1.1.2 in Achsrichtung in einer selben Bildposition auf einer hier angeordneten Zieloberfläche 5 abgebildet wird, was einer gegenseitigen Aufhebung der Farblängsfehler von Prescanoptik 2 und Postscanoptik 4 entspricht.

Als objektseitige Schnittweiten der Postscanoptik 4 werden hier jeweils die Abstände zwischen den Objektebenen $OE_{post\lambda1}$, $OE_{post\lambda2}$ und der in Nullstellung stehenden reflektierenden Polygonspiegelfläche 3.1.1. verstanden.

Damit bei einer Einkopplung in Crossscanrichtung die Postscanoptik 4 das Lichtbündel 1.1 nicht abschattet, schließen die beiden optischen Achsen $A_{pre}$ und $A_{post}$ einen hinreichend großen Winkel miteinander ein, weshalb die Drehachse D des Polygonspiegels 3.1 gegenüber diesen beiden optischen Achsen $A_{pre}$ und $A_{post}$ entsprechend geneigt angeordnet ist.

Zu gleichem Zwecke ist bei einer Einkopplung in Scanrichtung die Drehachse D mit einem hinreichend großen, senkrechten Abstand zur optischen Achse der Prescanoptik $A_{pre}$ angeordnet.

Auch der Farbquerfehler der Postscanoptik 4, der durch das F-Theta Objektiv entsteht und mit zunehmendem Einkoppelwinkel $\theta$ des Lichtbündels 1.1 in die Postscanoptik 4 zunimmt, hebt sich für eine erfindungsgemäße Scaneinrichtung mit dem farb- und polygonwinkelabhängigen Einkoppelwinkel der Prescanoptik 2 auf, was durch den Grad der Konvergenz/Divergenz des Lichtbündels 1.1, ausgedrückt durch die bildseitige Schnittweite der Prescanoptik 2, eingestellt wird.

Dazu wurden, wie nachfolgend genauer erläutert, mit Hilfe der beiden bildseitigen Schnittweiten der Prescanoptik $s'_{pre\lambda1}$, $s'_{pre\lambda2}$ und dem Polygonwinkel $W_p$ sowie der Annahme, dass beide Bündelanteile 1.1.1, 1.1.2 in einer gleichen Bildhöhe $y_1 = y_2$ auf der Zieloberfläche 5 abgebildet werden, die hierzu passenden beiden bildseitigen Brennweiten $f'_{post\lambda1}$, $f'_{post\lambda2}$ der Postscanoptik 4 errechnet. Eine Postscanoptik 4 mit diesen errechneten bildseitigen Brennweiten $f'_{post\lambda1}$, $f'_{post\lambda2}$ weist einen Farbquerfehler auf, welcher den Farbquerfehler aufhebt, der durch die Abbildung der Bündelanteile 1.1.1, 1.1.2 über die Prescanoptik 2 und die Scaneinheit 3 entsteht.

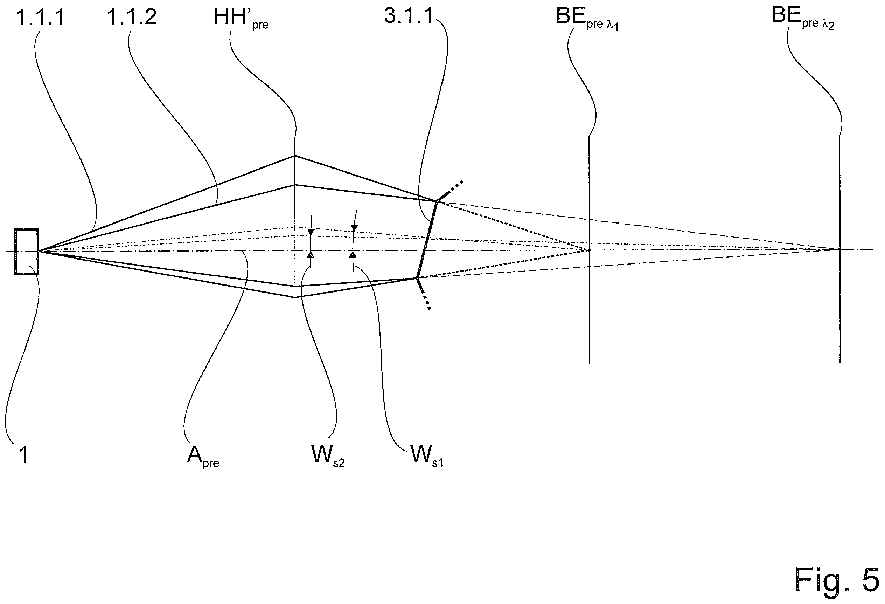

Aus Fig. 5 kann die Entstehung der unterschiedlich großen Winkelkomponenten $W_{s1}$ und $W_{s2}$ abgeleitet werden, die jeweils vom Achsstrahl eines Bündelanteils 1.1.1, 1.1.2 und der optischen Achse der Prescanoptik $A_{pre}$ eingeschlossen werden.

Nach Aufhebung des Farbquerfehlers werden die beiden Bündelanteile 1.1.1 und 1.1.2 sowohl längs als auch quer zur optischen Achse der Postscanoptik $A_{post}$ und damit vollständig, das heißt sowohl längs als auch quer betrachtet, in dieselbe Bildposition abgebildet.

Der bildseitige Öffnungswinkel $\omega'_{pre}$ der Prescanoptik 2 ist so gewählt, dass die reflektierende Polygonspiegelfläche 3.1.1 in Scanrichtung R in jeder Polygonwinkelstellung durch einen geometrisch begrenzten Anteil eines durch die Aperturblende $AP_{pre}$ der Prescanoptik 2 abbildbaren Lichtbündels 1.1 beleuchtet wird. Als reflektierende Polygonspiegelfläche 3.1.1 soll in jeder Polygonwinkelstellung nur die Polygonspiegelfläche 3.1.1 verstanden werden, die auf die Zieloberfläche 5 reflektiert.

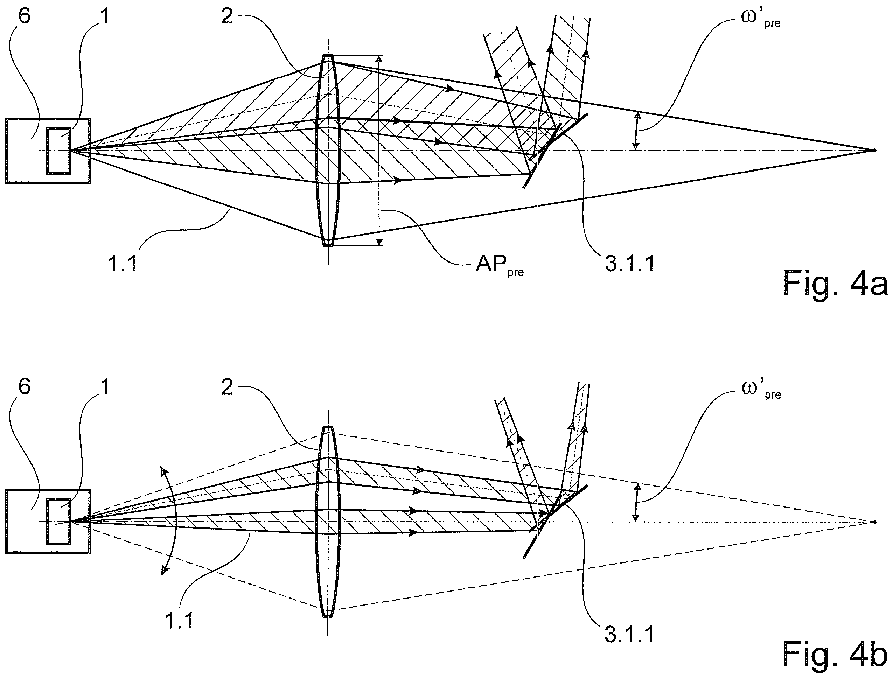

Das Lichtbündel 1.1 kann dann entweder ein breites, durch die Aperturblende $AP_{pre}$ begrenztes Lichtbündel 1.1 sein, dessen Mittelstrahl mit der optischen Achse der Prescanoptik $A_{pre}$ zusammenfällt und aus dem in Abhängigkeit vom Polygonwinkel $W_p$ unterschiedliche Ausschnitte reflektiert werden, siehe hierzu Fig. 4a, oder es kann als ein schmales Lichtbündel 1.1 ausgeführt sein, das in seiner Ausbreitungsrichtung, auf die Polygonwinkelstellung abgestimmt, moduliert und damit im Ganzen reflektiert werden kann, siehe hierzu Fig. 4b. Um das Lichtbündel 1.1 mit den entsprechenden Eigenschaften bereitzustellen, wird eine jeweils dazu geeignete Lichtquelle 1 fachmännisch konzipiert oder ausgewählt.

Gemäß dem in Fig. 4a gezeigten Ausführungsbeispiel ist eine Lichtquelle 1 mit einer Abstrahlcharakteristik gewählt bzw. das emittierte Lichtbündel 1.1 wird durch die Prescanoptik 2 so geformt bzw. aufgeweitet, dass die Aperturblende der Prescanoptik $AP_{pre}$ durch das Lichtbündel 1.1 voll ausgeleuchtet wird. Es trifft dann in unterschiedlichen Polygonwinkelstellungen des Polygonspiegels 3.1 ein anderer durch die reflektierende Polygonspiegelfläche 3.1.1 geometrisch begrenzter Ausschnitt des Lichtbündels 1.1 auf die reflektierende Polygonspiegelfläche 3.1.1 und wird zur Postscanoptik 4 reflektiert.

Gemäß dem in Fig. 4b gezeigten Ausführungsbeispiel ist der Prescanoptik 2 ein das Lichtbündel 1.1 in seiner Ausbreitungsrichtung beeinflussender akustooptischer Modulator 6 vorgeordnet. Es wird eine Lichtquelle 1 mit einer Abstrahlcharakteristik verwendet, die ein Lichtbündel 1.1 erzeugt, das, über die Prescanoptik 2 abgebildet, auf der reflektierenden Polygonspiegelfläche 3.1.1 einen Bündelquerschnitt, bevorzugt kleiner oder gleich der Polygonspiegelfläche 3.1.1, bildet, sodass es vollständig reflektiert wird.

Damit der Mittelstrahl des Lichtbündels 1.1 in jeder Polygonwinkelstellung mittig auf die reflektierende Polygonspiegelfläche 3.1.1 auftrifft, ist der Modulator 6 so ansteuerbar, dass dessen Winkelgeschwindigkeit, mit der er das Lichtbündel 1.1 um die optische Achse der Prescanoptik $A_{pre}$ schwenkt, auf die Rotationsgeschwindigkeit des Polygonspiegels 3.1 und damit auf die Scangeschwindigkeit abgestimmt ist.

Die erste beschriebene Ausführung einer Scaneinrichtung kommt zwar ohne einen akustooptischen Modulator 6 aus, jedoch ist sie energetisch uneffizient, da nur ein Teil der Strahlungsenergie des Lichtbündels 1.1 auf die Zieloberfläche 5 gelenkt und somit genutzt wird. Darüber hinaus ist bei einer gaußförmigen Intensitätsverteilung innerhalb des Lichtbündels 1.1 im Falle der zweiten Ausführung die auf den reflektierenden Polygonspiegel 3.1 auftreffende Strahlungsenergie des Lichtbündels 1.1 und damit dessen Ausleuchtung konstant.

In beiden Ausführungsbeispielen einer Scaneinrichtung wird der Einkoppelwinkel $\theta$ des Lichtbündels 1.1 in die Postscanoptik 4 nicht allein durch den Polygonwinkel $W_p$ bestimmt, wobei $\theta = 2\,W_p$ wäre, sondern es kommt eine schnittweiten- sowie polygonwinkelabhängige Winkelkomponente $W_s$ hinzu.

Damit ergibt sich der Einkoppelwinkel $\theta$

$$\text{für den Bündelanteil mit } \lambda_1: \quad \theta_{\lambda1} = 2\,W_p - W_{s1}\,(W_p;\,s'_{pre\lambda1}) \text{ und}$$
$$\text{für den Bündelanteil mit } \lambda_2: \quad \theta_{\lambda2} = 2\,W_p - W_{s2}\,(W_p;\,s'_{pre\lambda2}).$$

Für die Bildhöhe y, das heißt den Abstand der Abbildung des Lichtbündels 1.1 auf der Zieloberfläche 5 von der optischen Achse der Postscanoptik $A_{post}$ (Bildposition senkrecht zur optischen Achse $A_{post}$), ergibt sich damit nach der Postscanoptik 4, gebildet durch ein F-Theta Objektiv, mit einer ersten bildseitigen Brennweite $f'_{post\lambda1}$,

für den ersten Bündelanteil 1.1.1 mit $\lambda_1$ : $y_{\lambda 1} = 2\ f'_{post\lambda 1}\ W_p + f'_{post\lambda 1}\ W_{s1}\ (W_p;\ s'_{pre\lambda 1})$
und mit einer zweiten bildseitigen Brennweite $f'_{post\lambda 2}$,
für den zweiten Bündelanteil 1.1.2 mit $\lambda_2$: $y_{\lambda 2} = 2\ f'_{post\lambda 2}\ W_p + f'_{post\lambda 2}\ W_{s2}\ (W_p;\ s'_{pre\lambda 2})$
wobei:

$$\tan (W_{s1}) \approx Sw\ /\ 2 \,{}^* \sin (W_p)\ /\ s\grave{}_{pre\lambda 1}$$

und

$$\tan (W_{s2}) \approx Sw/2 \,{}^* \sin (W_p)\ /\ s\grave{}_{pre\lambda 2}\ \text{ist.}$$

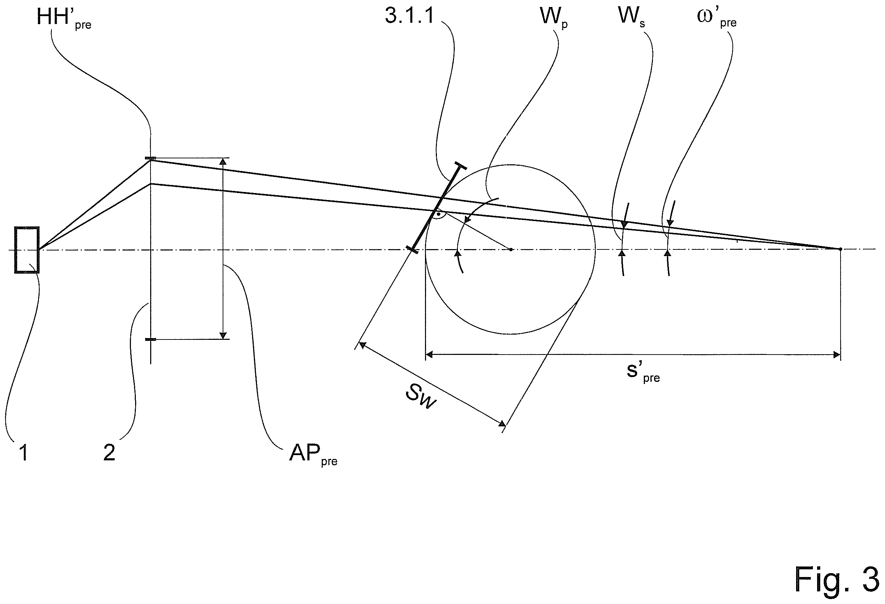

Die in der Beschreibung noch nicht eingeführten Kenngrößen sind aus Fig.5 bzw. aus Fig. 3 zu entnehmen, wobei diese in Fig. 3 der Übersichtlichkeit halber, ebenso wie in den Fig. 1, 4a und 4b, nicht wellenlängenabhängig differenziert dargestellt wurden.

In Kenntnis dieser Gleichungen wird nun ein optisches System gerechnet, in dem $f'_{post\lambda 1}$, $s'_{pre\lambda 1}$, $f'_{post\lambda 2}$ und $s'_{pre\lambda 2}$ so festgelegt werden, damit $y_{\lambda 1}$ gleich $y_{\lambda 2}$ ist.

Diese Eigenschaft führt zu einer Kompensation des Farbquerfehlers der Prescanoptik 4.

Die Berechnung der Prescanoptik 2 und der Postscanoptik 4 im Einzelnen und ihrer Anordnung zueinander, sodass die vorbenannten Bedingungen erfüllt sind, erfolgt durch einen Rechner. Dazu werden durch den Optikrechner in Kenntnis der vorbenannten Bedingungen entsprechend geeignete Startparameter eingeben.

Für viele Anwendungen ist eine telezentrische Ausführung der Postscanoptik 4 günstiger oder gar zwingend erforderlich.

Für große Bildfelder weist in diesem Fall das F-Theta Objektiv vorteilhaft anstelle der die Telezentrie erzeugenden Feldlinse einen Feldspiegel auf, durch den ein wesentlicher Anteil der durch das F-Theta Objektiv zu erbringenden Brechkraft eingebracht wird, der jedoch selbst keinen Farbfehler bewirkt, sodass der Farbfehler des F-Theta Objektivs klein gehalten werden kann.

Üblicherweise wird der Fachmann für eine gattungsgemäße Scaneinrichtung ein anamorphotisches optisches System berechnen, sodass die o. g. Bedingungen nur in einer Ebene eines gestreckten Optiksystems, aufgespannt durch die optische Achse A und die Scanrichtung R, zutreffen. In senkrechter Richtung zur Scanrichtung, der Crossscanrichtung, fallen die erste Bildebene und die zweite Bildebene dann nicht mit der ersten Bildebene $BE_{pre\lambda 1}$ und der zweiten Bildebene $BE_{pre\lambda 2}$ in Scanrichtung zusammen, sondern liegen vorteilhaft auf oder nahe der reflektierenden Polygonspiegelfläche 3.1.1, womit eine sogenannte Wobbelkompensation erreicht wird.

Die anamorphotische Ausführung einer erfindungsgemäßen Scaneinrichtung ist nicht Gegenstand der Erfindung; vielmehr geht es um die in Scanrichtung wirkenden Eigenschaften der Scaneinrichtung und damit um die diese Eigenschaften bewirkenden Merkmale.

Bezugszeichenliste

| | |
|---|---|
| 1 | Lichtquelle |
| 1.1 | Lichtbündel |
| 1.1.1 | erster Bündelanteil |
| 1.1.2 | zweiter Bündelanteil |
| 2 | Prescanoptik - auch durch HH'$_{pre}$ dargestellt und bezeichnet |
| 3 | Scaneinheit |
| 3.1 | Polygonspiegel |
| 3.1.1 | reflektierende Polygonspiegelfläche |
| 4 | Postscanoptik - auch durch HH'$_{post}$ dargestellt und bezeichnet |
| 5 | Zieloberfläche |
| 6 | akustooptischer Modulator |
| | |
| R | Scanrichtung |
| A$_{pre}$ | optische Achse der Prescanoptik |
| A$_{post}$ | optische Achse der Postscanoptik |

| $\lambda_1$ | erste Wellenlänge, gleich Wellenlänge des ersten Bündelanteils |
|---|---|
| $\lambda_2$ | zweite Wellenlänge, gleich Wellenlänge des zweiten Bündelanteils |
| $BE_{pre\lambda1}$ | erste Bildebene der Prescanoptik |
| $s'_{pre\lambda1}$ | erste bildseitige Schnittweite der Prescanoptik |
| $BE_{pre\lambda2}$ | zweite Bildebene der Prescanoptik |
| $s'_{pre\lambda2}$ | zweite bildseitige Schnittweite der Prescanoptik |
| $s_{post\lambda1}$ | erste objektseitige Schnittweite der Postscanoptik |
| $s_{post\lambda2}$ | zweite objektseitige Schnittweite der Postscanoptik |
| $OE_{post\lambda1}$ | erste Objektebene der Postscanoptik |
| $OE_{post\lambda2}$ | zweite Objektebene der Postscanoptik |
| $BE_{post}$ | Bildebene der Postscanoptik |
| $AP_{pre}$ | Aperturblende der Prescanoptik |
| $\omega'_{pre}$ | bildseitiger Öffnungswinkel der Prescanoptik |
| $W_p$ | Polygonwinkel |
| $W_s$ | Winkelkomponente (nicht wellenlängendifferenziert) |
| $W_{s1}$ | Winkelkomponente des ersten Bündelanteils |
| $W_{s2}$ | Winkelkomponente des zweiten Bündelanteils |
| $Sw$ | Schlüsselweite des Polygonspiegels |
| $\theta$ | Einkoppelwinkel in die Postscanoptik (nicht wellenlängendifferenziert) |
| $\theta_{\lambda1}$ | Einkoppelwinkel in die Postscanoptik für die erste Wellenlänge |
| $\theta_{\lambda2}$ | Einkoppelwinkel in die Postscanoptik für die zweite Wellenlänge |
| $f'_{post}$ | bildseitige Brennweite der Postscanoptik (nicht wellenlängendifferenziert) |
| $f'_{post\lambda1}$ | erste bildseitige Brennweite der Postscanoptik für den ersten Bündelanteil |
| $f'_{post\lambda2}$ | zweite bildseitige Brennweite der Postscanoptik für den zweiten Bündelanteil |
| $y$ | Bildhöhe (nicht wellenlängendifferenziert) |
| $y_1$ | Bildhöhe für den ersten Bündelanteil |
| $y_2$ | Bildhöhe für den zweiten Bündelanteil |
| $D$ | Drehachse |

**Patentansprüche**

1. Achromatische Scaneinrichtung mit einer Lichtquelle (1), einer mit einem rotierbaren Polygonspiegel (3.1), einen Polygonwinkel ($W_p$) aufweisend, gebildeten Scaneinheit (3), einer dem Polygonspiegel (3.1) vorgeordneten Prescanoptik (2) zum Formen und Führen eines von der Lichtquelle (1) ausgesendeten Lichtbündels (1.1) auf den Polygonspiegel (3.1), wobei das Lichtbündel (1.1) einen ersten Bündelanteil (1.1.1) mit einer ersten Wellenlänge ($\lambda_1$) und einen zweiten Bündelanteil (1.1.2) mit einer zweiten Wellenlänge ($\lambda_2$) aufweist, sowie einer dem Polygonspiegel (3.1) nachgeordneten Postscanoptik (4), gebildet durch ein F-Theta Objektiv zur Formung und Führung des durch den Polygonspiegel (3.1) in eine Scanrichtung (R) abgelenkten Lichtbündels (1.1) auf eine Zieloberfläche (5), die für die beiden Bündelanteile (1.1.1), (1.1.2) in einer Bildebene der Postscanoptik ($BE_{post}$) angeordnet ist, wobei die Postscanoptik (4) monochromatisch ist, das heißt eine Abbildung in eine ideale Bildposition erfolgt nur für ein Lichtbündel mit einer Wellenlänge und die Prescanoptik (2) und die Postscanoptik (4) so ausgelegt und zueinander angeordnet sind, dass für ein auf die Zieloberfläche (5) abgebildetes Lichtbündel (1.1) eine erste Bildebene der Prescanoptik ($BE_{pre\lambda1}$) in einer ersten bildseitigen Schnittweite ($s'_{pre\lambda1}$) mit einer ersten Objektebene der Postscanoptik ($OE_{post\lambda1}$) für den ersten Bündelanteil (1.1.1) und eine zweite Bildebene der Prescanoptik ($BE_{pre\lambda2}$) in einer zweiten bildseitigen Schnittweite ($s'_{pre\lambda2}$) mit einer zweiten Objektebene der Postscanoptik ($OE_{post\lambda2}$) für den zweiten Bündelanteil (1.1.2) zusammenfallen, wobei der ersten Objektebene der Postscanoptik ($OE_{post\lambda1}$) und der zweiten Objektebene der Postscanoptik ($OE_{post\lambda2}$) die Bildebene der Postscanoptik ($BE_{post}$) zugeordnet ist, womit für die beiden Bündelanteile (1.1.1), (1.1.2) der Farblängsfehler korrigiert ist, **dadurch gekennzeichnet, dass** die Postscanoptik (4) für den ersten Bündelanteil (1.1.1) eine erste bildseitige Brennweite ($f_{post\lambda1}$) und für den zweiten Bündelanteil (1.1.2) eine zweite bildseitige Brennweite ($f'_{post\lambda2}$) aufweist, die folgende Gleichung erfüllen:

$$2\, f`_{post\lambda1}\, W_p + f`_{post\lambda1}\, W_{s1}\, (W_p; s`_{pre\lambda1}) = 2\, f`_{post\lambda2}\, W_p + f`_{post\lambda2}\, W_{s2}\, (W_p; s`_{pre\lambda2}),$$

wobei $W_{s1}$ eine Winkelkomponente des ersten Bündelanteils (1.1.1) und $W_{s2}$ eine Winkelkomponente des zweiten Bündelanteils (1.1.2) ist und $\tan(W_{s1}) \approx Sw\,/\,2 * \sin(W_p)\,/\,s'_{pre\lambda1}$ und $\tan(W_{s2}) \approx Sw/2 * \sin(W_p)\,/\,s'_{pre\lambda2}$ ist, wobei

Sw die Schlüsselweite des Polygonspiegels (3.1) ist, womit für die beiden Bündelanteile (1.1.1), (1.1.2) auch der Farbquerfehler korrigiert ist.

2. Achromatische Scaneinrichtung nach Anspruch 1, **dadurch gekennzeichnet, dass** der Prescanoptik (2) ein akustooptischer Modulator (6) vorgeordnet ist, der so ansteuerbar ist, dass er das Lichtbündel (1.1) mit einer gleichen Winkelgeschwindigkeit um eine optische Achse der Prescanoptik ($A_{pre}$) schwenkt, mit welcher der Polygonspiegel (3.1) rotiert, sodass ein Mittelstrahl des Lichtbündels (1.1) stets auf den Mittelpunkt einer reflektierenden Polygonspiegelfläche (3.1.1) des Polygonspiegels (3.1) gerichtet ist.

3. Achromatische Scaneinrichtung nach Anspruch 2, **dadurch gekennzeichnet, dass** die Lichtquelle (1) und der Modulator (6) so ausgelegt sind, dass das Lichtbündel (1.1) vollständig reflektiert wird.

4. Achromatische Scaneinrichtung nach Anspruch 1, **dadurch gekennzeichnet, dass** ein bildseitiger Öffnungswinkel der Prescanoptik ($\omega'_{pre}$) so gewählt ist, dass das Lichtbündel (1.1), wenn es eine Aperturblende der Prescanoptik ($AP_{pre}$) voll ausleuchtet, in jeder Polygonwinkelstellung des Polygonspiegels (3.1) von der reflektierenden Polygonspiegelfläche (3.1.1) in Ausschnitten reflektiert wird.

5. Achromatische Scaneinrichtung nach Anspruch 1, **dadurch gekennzeichnet, dass** das F-Theta Objektiv ein telezentrisches Objektiv ist.

6. Achromatische Scaneinrichtung nach Anspruch 5, **dadurch gekennzeichnet, dass** das F-Theta Objektiv einen Zylinderspiegel umfasst, dessen Zylinderachse senkrecht zur Scanrichtung (R) ausgerichtet ist, womit ein Teil der Brechkraft des F-Theta Objektivs wellenlängenunabhängig bewirkt wird.

## Claims

1. An achromatic scanning device comprising a light source (1), a scanning unit (3) formed with a rotatable polygon mirror (3.1) having a polygon angle ($W_p$), prescan optics (2) arranged upstream of the polygon mirror (3.1) for shaping and guiding a light beam (1.1) emitted by the light source (1) onto the polygon mirror (3.1), the light beam (1.1) having a first beam portion (1.1.1) with a first wavelength ($\lambda_1$) and a second beam portion (1.1.2) having a second wavelength ($\lambda_2$), and postscan optics (4) arranged downstream of the polygon mirror (3.1) and formed by an F-Theta objective for shaping and guiding the light beam (1.1) deflected by the polygon mirror (3.1) in a scanning direction (R) onto a target surface (5) which, for the two beam portions (1.1.1), (1.1.2), is arranged in an image plane of the postscan optics ($BE_{post}$), the postscan optics (4) being monochromatic, i.e. imaging into an ideal image position takes place only for a light beam with one wavelength, and the prescan optics (2) and the postscan optics (4) being designed and arranged with respect to one another in such a way that, for a light beam (1.1) imaged onto the target surface (5), a first image plane of the prescan optics ($BE_{pre\lambda 1}$) in a first image-side cut width ($s'_{pre\lambda 1}$) coincides with a first object plane of the postscan optics ($OE_{post\lambda 1}$) for the first beam portion (1.1.1) and a second image plane of the prescan optics ($BE_{pre\lambda 2}$) in a second image-side cut width ($s'_{pre\lambda 2}$) coincides with a second object plane of the postscan optics ($OE_{post\lambda 1}$) for the second beam portion (1.1.2), the image plane of the postscan optics ($BE_{post}$) being assigned to the first object plane of the postscan optics ($OE_{post\lambda 1}$) and the second object plane of the postscan optics ($OE_{post\lambda 2}$), so that the longitudinal chromatic aberration is corrected for the two beam portions (1.1.1), (1.1.2), **characterised in that** the postscan optics (4) have a first image-side focal length ($f'_{post\lambda 1}$) for the first beam portion (1.1.1) and a second image-side focal length ($f'_{post\lambda 2}$) for the second beam portion (1.1.2), which satisfy the following equation:

$$2\, f'_{post\lambda 1}\, W_p + f'_{post\lambda 1}\, W_{s1}\, (W_p;\, s'_{pre\lambda 1}) = 2\, f'_{post\lambda 2}\, W_p + f'_{post\lambda 2}\, W_{s2}\, (W_p;\, s'_{pre\lambda 2}),$$

where $W_{s1}$ is an angular portion of the first beam portion (1.1.1) and $W_{s2}$ is an angular portion of the second beam portion (1.1.2) and $\tan(W_{s1}) \approx Sw / 2 * \sin(W_p) / S'_{pre\lambda 1}$ and $\tan(W_{s2}) \approx Sw/2 * \sin(W_p) / S'_{pre\lambda 2}$, where Sw is the key size of the polygon mirror (3.1), whereby the transverse chromatic aberration is also corrected for the two beam portions (1.1.1), (1.1.2).

2. The achromatic scanning device according to claim 1, **characterised in that** an acousto-optical modulator (6) is arranged upstream of the prescan optics (2), which modulator (6) can be controlled in such a way that it pivots the light beam (1.1) at the same angular velocity about an optical axis of the prescan optics (A$_{pre}$) at which the polygon mirror (3.1) rotates, so that a central beam of the light beam (1.1) is always directed towards the centre of a reflecting polygon mirror surface (3.1.1) of the polygon mirror (3.1).

3. The achromatic scanning device according to claim 2, **characterised in that** the light source (1) and the modulator (6) are designed such that the light beam (1.1) is reflected completely.

4. The achromatic scanning device according to claim 1, **characterised in that** an image-side aperture angle of the prescan optics (ω'$_{pre}$) is selected such that the light beam (1.1), when it fully illuminates an aperture stop of the prescan optics (AP$_{pre}$), is reflected in sections by the reflecting polygon mirror surface (3.1.1) in each polygon angle position of the polygon mirror (3.1).

5. The achromatic scanning device according to claim 1, **characterised in that** the F-Theta objective is a telecentric objective.

6. The achromatic scanning device according to claim 5, **characterised in that** the F-Theta objective comprises a cylinder mirror whose cylinder axis is aligned perpendicular to the scanning direction (R), whereby a part of the refractive power of the F-Theta objective is effected wavelength-independently.

**Revendications**

1. Dispositif de balayage achromatique comportant une source lumineuse (1), une unité de balayage (3) constituée d'un miroir polygonal rotatif (3.1) présentant un angle polygonal (Wp), une optique de pré-balayage (2) disposée en amont du miroir polygonal (3.1) pour former et guider un faisceau lumineux (1.1) émis par la source lumineuse (1) sur le miroir polygonal (3.1), le faisceau lumineux (1.1) ayant une première partie de faisceau (1.1.1) avec une première longueur d'onde ($\lambda_1$) et une deuxième partie de faisceau (1.1.2) avec une deuxième longueur d'onde ($\lambda_2$), et une optique de post-balayage (4) disposée en aval du miroir polygonal (3.1) et constituée d'un objectif F-thêta pour former et guider le faisceau lumineux (1.1) dévié par le miroir polygonal (3.1) dans une direction de balayage (R) sur une surface cible (5) qui est disposée pour les deux parties de faisceau (1.1.1), (1.1.2) dans un plan image de l'optique de optique de post-balayage (BE$_{post}$), où l'optique de post-balayage (4) est monochromatique, c'est-à-dire que l'imagerie dans une position d'image idéale n'est effectuée que pour un faisceau lumineux ayant une longueur d'onde, et l'optique de optique de pré-balayage (2) et l'optique de post-balayage (4) sont conçues et disposées l'une par rapport à l'autre de sorte que, pour un faisceau lumineux (1.1) imagé sur la surface cible (5), un premier plan image de l'optique de pré-balayage (BE$_{pre\lambda1}$) dans une première largeur de coupe côté image (s'$_{pre\lambda1}$) coïncide avec un premier plan objet de l'optique de post-balayage (OE$_{post\lambda1}$) pour la première portion de faisceau (1.1.1) et un deuxième plan image de l'optique de pré-balayage (BE$_{pre\lambda2}$) dans une deuxième largeur de coupe côté image (s'$_{pre\lambda2}$) coïncide avec un deuxième plan objet de l'optique de post-balayage (OEpost$_{\lambda1}$) pour la deuxième portion de faisceau (1.1.2), le plan image de l'optique de post-balayage (BE$_{post}$) étant affecté au premier plan objet de l'optique de post-balayage (OE$_{post\lambda1}$) et au second plan objet de l'optique de post-balayage (OE$_{post\lambda2}$), de sorte que l'aberration chromatique longitudinale est corrigée pour les deux parties de faisceau (1.1.1), (1.1.2), **caractérisé en ce que** l'optique de post-balayage (4) présente une première distance focale (f'$_{post\lambda1}$) côté image pour la première partie de faisceau (1.1.1) et une deuxième distance focale (f'$_{post\lambda2}$) côté image pour la deuxième partie de faisceau (1.1.2), qui satisfont l'équation suivante :

$$2\,f`_{post\lambda1}\,W_p + f`_{post\lambda1}\,W_{s1}\,(W_p;\,s`_{pre\lambda1}) = 2\,f`_{post\lambda2}\,W_p + f`_{post\lambda2}\,W_{s2}\,(W_p;\,s`_{pre\lambda2}),$$

où W$_{s1}$ est une composante angulaire de la première partie de faisceau (1.1.1) et W$_{s2}$ est une composante angulaire de la deuxième partie de faisceau (1.1.2) et tan (W$_{s1}$) ≈ Sw / 2 * sin (W$_p$) / s'$_{pre\lambda1}$ et tan (W$_{s2}$) ≈ Sw/2 * sin (W$_p$) / s'$_{pre\lambda2}$, où Sw est la largeur de clé du miroir polygonal (3.1), de sorte que, pour les deux parties de faisceau (1.1.1), (1.1.2), l'aberration chromatique transversale est également corrigée.

2. Dispositif de balayage achromatique selon la revendication 1, **caractérisé en ce qu'**un modulateur acousto-optique (6) est disposé en amont de l'optique de pré-balayage (2), lequel modulateur (6) peut être commandé de telle sorte qu'il peut pivoter le faisceau lumineux (1.1) à la même vitesse angulaire autour d'un axe optique de l'optique de pré-balayage (A$_{pre}$) à laquelle tourne le miroir polygonal (3.1), de sorte qu'un faisceau central du faisceau lumineux (1.1) est toujours dirigé vers le centre d'une surface réfléchissante (3.1.1) du miroir polygonal (3.1).

3. Dispositif de balayage achromatique selon la revendication 2, **caractérisé en ce que** la source lumineuse (1) et le modulateur (6) sont conçus de telle sorte que le faisceau lumineux (1.1) est complètement réfléchi.

4. Dispositif de balayage achromatique selon la revendication 1, **caractérisé en ce qu'**un angle d'ouverture côté image de l'optique de pré-balayage ($\omega'_{pre}$) est sélectionné de telle sorte que le faisceau lumineux (1.1), lorsqu'il éclaire complètement un arrêt d'ouverture de l'optique de optique de pré-balayage ($AP_{pre}$), est réfléchi en sections par la surface réfléchissante (3.1.1) du miroir polygonal dans chaque position angulaire du polygone (3.1).

5. Dispositif de balayage achromatique selon la revendication 1, **caractérisé en ce que** l'objectif F-thêta est un objectif télécentrique.

6. Dispositif de balayage achromatique selon la revendication 5, **caractérisé en ce que** l'objectif F-thêta comprend un miroir cylindrique dont l'axe cylindrique est aligné perpendiculairement à la direction de balayage (R), une partie de la puissance de réfraction de l'objectif F-thêta étant réalisée indépendamment des longueurs d'onde.

Fig. 1

Fig. 2

Fig. 3

EP 2 880 485 B1

Fig. 4a

Fig. 4b

EP 2 880 485 B1

1.1.1    1.1.2    HH'$_{pre}$         3.1.1        BE$_{pre\,\lambda_1}$         BE$_{pre\,\lambda_2}$

1                          A$_{pre}$        W$_{s2}$    W$_{s1}$

Fig. 5

EP 2 880 485 B1

**IN DER BESCHREIBUNG AUFGEFÜHRTE DOKUMENTE**

**In der Beschreibung aufgeführte Patentdokumente**

- DE 60302183 T2
- US 2005185238 A1
- EP 0211803 A1